(19) **Europäisches Patentamt European Patent Office Office européen des brevets**

(11) **EP 3 849 000 B1**

(12) **FASCICULE DE BREVET EUROPEEN**

(45) Date de publication et mention
de la délivrance du brevet:
**01.06.2022   Bulletin 2022/22**

(21) Numéro de dépôt: **21150364.4**

(22) Date de dépôt: **06.01.2021**

(51) Classification Internationale des Brevets (IPC):
$C01G\ 49/00$ (2006.01)    $H01M\ 4/133$ (2010.01)
$H01M\ 4/134$ (2010.01)    $H01M\ 4/36$ (2006.01)
$H01M\ 4/38$ (2006.01)    $H01M\ 4/62$ (2006.01)
$H01M\ 4/86$ (2006.01)    $H01M\ 6/16$ (2006.01)
$H01M\ 4/136$ (2010.01)    $H01M\ 4/583$ (2010.01)
$C01G\ 3/12$ (2006.01)    $C01G\ 49/10$ (2006.01)
$C01G\ 49/12$ (2006.01)    $H01M\ 4/587$ (2010.01)
$H01M\ 4/58$ (2010.01)

(52) Classification Coopérative des Brevets (CPC):
**H01M 4/133; C01G 49/009; H01M 4/134;
H01M 4/136; H01M 4/364; H01M 4/5815;
H01M 4/582; H01M 4/583; H01M 4/587;
H01M 4/622; H01M 4/624; H01M 6/164;**
H01M 2300/0025; H01M 2300/0028; Y02E 60/10;
(Cont.)

(54) **CELLULE ÉLECTROCHIMIQUE SPÉCIFIQUE POUR ACCUMULATEUR FONCTIONNANT SELON LE PRINCIPE DE FORMATION D'UN ALLIAGE AVEC LE MATÉRIAU ACTIF DE L ÉLECTRODE NEGATIVE COMPRENANT UN COUPLE D ÉLECTRODES SPÉCIFIQUE**

SPEZIFISCHE ELEKTROCHEMISCHE SPEICHERZELLE FÜR AKKU, DIE NACH DEM PRINZIP EINER LEGIERUNGSBILDUNG MIT DEM AKTIVEN MATERIAL DER NEGATIVEN ELEKTRODE FUNKTIONIERT UND EIN SPEZIFISCHES ELEKTRODENPAAR UMFASST

SPECIFIC ELECTROCHEMICAL CELL FOR ACCUMULATOR OPERATING ACCORDING TO THE PRINCIPLE OF FORMING AN ALLOY WITH THE ACTIVE MATERIAL OF THE NEGATIVE ELECTRODE COMPRISING A SPECIFIC PAIR OF ELECTRODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2020   FR 2000086**

(43) Date de publication de la demande:
**14.07.2021   Bulletin 2021/28**

(73) Titulaire: **Commissariat à l'énergie atomique et aux énergies alternatives
75015 Paris (FR)**

(72) Inventeurs:
• **MARTINET, Sébastien
38054 GRENOBLE CEDEX 09 (FR)**
• **BOURBON, Carole
38054 GRENOBLE CEDEX 09 (FR)**

(74) Mandataire: **Brevalex
95, rue d'Amsterdam
75378 Paris Cedex 8 (FR)**

(56) Documents cités:
**US-A1- 2014 349 180**

• **JORDI CABANA ET AL: "Beyond Intercalation-Based Li-Ion Batteries: The State of the Art and Challenges of Electrode Materials Reacting Through Conversion Reactions", ADVANCED MATERIALS, vol. 22, no. 35, 15 septembre 2010 (2010-09-15), pages E170-E192, XP055150871, ISSN: 0935-9648, DOI: 10.1002/adma.201000717**

(52) Classification Coopérative des Brevets (CPC):
(Cont.)
Y02P 70/50

## Description

## DOMAINE TECHNIQUE

La présente invention a trait à une cellule électrochimique pour accumulateur comprenant une électrode négative comprenant, comme matériau actif, un matériau alliable avec un élément M, M pouvant être un élément alcalin (en particulier, du lithium) ou un élément alcalino-terreux présent dans l'électrolyte, les variations volumiques de cette électrode se produisant, lors des cycles de charge et de décharge, par formation d'un alliage ou désalliage, étant compensées par le choix d'une électrode positive comportant un matériau actif apte à compenser lesdites variations volumiques.

Le domaine général de l'invention peut être ainsi défini comme étant celui des accumulateurs fonctionnant selon le principe de formation d'un alliage avec l'un au moins des matériaux actifs d'électrode lors du processus de charge.

Les accumulateurs de ce type, variantes des accumulateurs métal-ion, ont pour vocation d'être utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (Ni-MH). Ils peuvent également servir à fournir l'alimentation en énergie nécessaire aux nouvelles microapplications, telles que les cartes à puce, les capteurs ou autres systèmes électromécaniques ainsi que pour l'électromobilité.

Du point de vue du fonctionnement, les accumulateurs susmentionnés fonctionnent, lors du processus de charge, selon le principe de formation d'un alliage avec le matériau actif de l'électrode négative.

Plus spécifiquement, en prenant pour exemple, les accumulateurs au lithium, lors de la charge de l'accumulateur, l'électrode négative va incorporer du lithium provenant de l'électrolyte conducteur ionique pour former un alliage avec le matériau actif de l'électrode négative, qui peut être du silicium, de l'étain, de l'antimoine, de l'aluminium ou du germanium, les capacités spécifiques pratiques des électrodes comprenant un tel matériau actif obtenues étant supérieures à celles obtenues avec des électrodes négatives classiques à base de graphite.

En particulier, lorsque le silicium est utilisé, comme matériau actif, cela permet d'augmenter significativement la capacité spécifique pratique de l'électrode négative liée à l'insertion du lithium dans celle-ci, laquelle est de 320 mAh/g pour une électrode en graphite (372 mAh/g en théorie) et de l'ordre de 3580 mAh/g pour une électrode à base de silicium (correspondant à la formation de l'alliage $Li_{15}Si_4$ lors de l'insertion à température ambiante du lithium dans le silicium). Ainsi, par le biais de prévisions simples, il est possible d'envisager un gain d'environ 40 et 35%, respectivement en énergie volumique et en énergie massique, si l'on substitue le graphite par du silicium dans un accumulateur classique au lithium. Par ailleurs, la fenêtre de potentiel de fonctionnement de l'alliage lithium-silicium de formule $Li_{15}Si_4$ (0,4-0,05 V/Li-Li$^+$) plus élevée que celle du graphite, permet d'éviter la formation d'un dépôt de lithium métallique et les risques associés, tout en laissant la possibilité de procéder à des charges plus rapides. De plus, il est établi que la réaction de formation de l'alliage lithium-silicium, conduisant à une capacité spécifique pratique très élevée (de l'ordre de 3578 mAh/g), est réversible.

Néanmoins, l'utilisation d'un matériau alliable comme matériau actif dans une électrode négative d'un accumulateur pose un certain nombre d'inconvénients.

En particulier, en se référant à un accumulateur au lithium comprenant du silicium comme matériau actif de l'électrode négative, lors de la réaction de formation de l'alliage silicium-lithium (correspondant à l'insertion du lithium dans l'électrode négative en processus de charge), l'expansion volumique entre la phase délithiée et la phase lithiée peut atteindre 280%. Cette forte expansion, suivie d'une contraction de même amplitude (correspondant à la désinsertion du lithium dans l'électrode négative lors du processus de décharge) entraîne rapidement des dommages mécaniques irréversibles de l'électrode et à terme, une perte de contact de l'électrode négative avec le collecteur de courant sous-jacent. Il peut s'ensuivre ainsi une perte rapide de la capacité en cyclage. Pour limiter ces phénomènes, l'utilisation du silicium comme matériau actif d'électrode négative peut être utilisée en mélange dans l'électrode négative de sorte à ce que celle-ci ne dépasse pas 10% en masse de la masse totale de l'électrode négative, ce qui contribue à amoindrir les performances de l'accumulateur.

Au vu de ce qui précède, les inventeurs se sont fixé pour objectif de proposer des cellules électrochimiques qui permettent de bénéficier des avantages liés à l'utilisation d'un matériau actif d'électrode négatif alliable tout en gommant les inconvénients liés à l'expansion volumique susmentionnée.

## EXPOSÉ DE L'INVENTION

Aussi, les inventeurs ont découvert, de manière surprenante, qu'en associant à l'électrode négative comportant, comme matériau actif, un matériau alliable, une électrode positive comprenant un matériau actif spécifique, il est possible de compenser les phénomènes de variation volumique constatés au niveau de l'électrode négative lors du processus de charge et du processus de décharge.

L'invention a ainsi trait à une cellule électrochimique pour accumulateur fonctionnant selon le principe de formation d'un alliage avec le matériau actif de l'électrode négative lors du processus de charge comprenant :

- une électrode négative comprenant, comme matériau actif, un matériau actif comprenant un matériau alliable avec un élément M, M étant un élément métallique, en particulier, un élément alcalin ou un élément alcalino-terreux ;
- une électrode positive comprenant, comme matériau actif, un matériau actif comprenant un matériau de conversion ;
- un électrolyte comprenant au moins un sel de M disposé entre l'électrode négative et l'électrode positive.

Avant d'entrer plus en détail dans l'exposé de cette invention, nous précisons les définitions suivantes.

Par électrode positive, il est entendu, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, il est entendu, dans ce qui précède et ce qui suit, l'électrode qui fait office d'anode, quand l'accumulateur débite du courant (c'est-à-dire lorsqu'elle est en processus de décharge) et qui fait office de cathode, lorsque l'accumulateur est en processus de charge.

Dans les cellules électrochimiques de l'invention, l'électrode négative comprend, comme matériau actif, un matériau actif comprenant un matériau alliable avec un élément M, M étant un élément métallique, en particulier, un élément alcalin ou un élément alcalino-terreux, lequel élément M est compris dans l'électrolyte sous forme d'au moins un sel de M.

Plus spécifiquement, le matériau alliable est un matériau comprenant un ou plusieurs éléments métalliques ou métalloïdes au degré d'oxydation 0, ledit matériau formant, de manière réversible, lors du processus de charge de la cellule électrochimique, un alliage avec l'élément M compris dans l'électrolyte, M étant un cation du sel de M de l'électrolyte. Il est entendu que, lors du processus de décharge, le matériau actif revient à son état non allié libérant ainsi de nouveau l'élément M, la réaction de formation d'alliage étant une réaction réversible.

L'élément M peut être un élément alcalin, tel que :

- le lithium, auquel cas la cellule électrochimique pour accumulateur peut être qualifiée de cellule électrochimique pour accumulateur au lithium, le matériau alliable dans ce cas comprenant (ou étant constitué), avantageusement, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci, la préférence se portant sur le germanium au degré d'oxydation 0, l'antimoine au degré d'oxydation 0 ou le phosphore au degré d'oxydation 0 ;

- le sodium, auquel cas la cellule électrochimique pour accumulateur peut être qualifiée de cellule électrochimique pour accumulateur au sodium, le matériau alliable dans ce cas comprenant (ou étant constitué), avantageusement, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci ;
- le potassium, auquel cas la cellule électrochimique pour accumulateur peut être qualifiée de cellule électrochimique pour accumulateur au potassium, le matériau alliable dans ce cas comprenant (ou étant constitué), avantageusement, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci.

L'élément M peut être également un élément alcalino-terreux, tel que :

- le calcium, auquel cas la cellule électrochimique pour accumulateur peut être qualifiée de cellule électrochimique pour accumulateur au calcium, le matériau alliable dans ce cas comprenant (ou étant constitué), avantageusement, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci ;
- le magnésium, auquel cas la cellule électrochimique pour accumulateur peut être qualifiée de cellule électrochimique pour accumulateur au magnésium, le matériau alliable dans ce cas comprenant (ou étant constitué), avantageusement, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci.

Le matériau actif peut être constitué uniquement du matériau alliable ou peut comprendre, en outre, un élément actif apte à intercaler l'élément M lors du processus de charge, cet élément actif pouvant être du graphite.

Selon un mode particulier de réalisation, en particulier, lorsque le matériau actif comprend, comme matériau alliable, du silicium, le matériau actif peut ainsi consister en un composite graphite-silicium et plus spécifiquement, un matériau composite consistant en un agrégat de particules de graphite et de particules de silicium.

L'électrode négative peut être constituée uniquement du matériau actif ou peut comprendre, en outre :

- un liant polymérique, tel que du polyfluorure de vinylidène (connu sous l'abréviation PVDF), un mélange de carboxyméthylcellulose (connu sous l'abréviation CMC) avec un latex du type styrène-butadiène (connu sous l'abréviation SBR) ou avec de l'acide polyacrylique (connu sous l'abréviation PAA) ; et/ou
- un ou plusieurs adjuvants conducteurs de l'électricité, qui peuvent être des matériaux carbonés comme du noir de carbone ou des fibres de carbone obtenues en phase vapeur (connues sous l'abréviation VGCF).

L'électrode négative peut être également associée à un collecteur de courant métallique, tel qu'un collecteur de courant en cuivre. Ceci signifie, en d'autres termes, qu'elle est directement en contact avec ce collecteur, pour permettre l'acheminement du courant électrique vers l'extérieur de la cellule électrochimique. Le collecteur de courant peut se présenter sous forme d'un feuillard en cuivre. L'électrode négative, quant à elle, peut se présenter sous forme d'une couche enduite sur le collecteur de courant.

L'électrode positive, quant à elle, comprend, comme matériau actif, un matériau actif comprenant un matériau de conversion, c'est-à-dire un matériau subissant une réaction de conversion lors du processus de décharge, par réduction électrochimique par l'élément M présent dans l'électrolyte, cette réaction se matérialisant, classiquement, par un déplacement d'atomes du matériau par l'introduction de l'élément M, lesdits atomes étant extrudés hors du réseau du matériau à l'état d'oxydation 0, tandis que l'élément M forme un composé avec les autres atomes du matériau, moyennant quoi il en résulte un matériau composite comprenant des particules d'atomes à l'état d'oxydation 0 issus du matériau de conversion, lesdites particules étant encapsulées dans une matrice formée du composé de l'élément M avec les autres atomes du matériau de conversion.

A titre d'exemple, si l'on considère que le matériau de conversion répond à la formule AX et l'élément M est du lithium, la réaction de conversion peut être schématisée par l'équation suivante :

$$AX + xLi^+ + xe^- \rightarrow Li_xX + A$$

x correspondant au degré d'oxydation de X.

Plus spécifiquement, le matériau de conversion peut comprendre (ou être) un fluorure d'au moins un élément métallique de transition, un phosphure d'au moins un élément métallique de transition, un sulfure d'au moins un élément métallique de transition, un oxyde d'au moins un élément métallique de transition et/ou des mélanges de ceux-ci. Il s'entend, au regard de ce qui précède, que le matériau de conversion se trouve sous forme d'un fluorure d'au moins un élément métallique de transition, d'un phosphure d'au moins un élément métallique de transition, d'un sulfure d'au moins un élément métallique de transition, d'un oxyde d'au moins un élément métallique de transition ou des mélanges de ceux-ci, lorsque la cellule est à l'état chargé.

Avantageusement, le matériau de conversion comprend (ou est) un fluorure d'au moins un élément métallique de transition, tel que du fer et/ou du cuivre (et plus spécifiquement, un fluorure de fer et de cuivre) ou un oxyde d'au moins un élément métallique de transition, tel que du nickel, des exemples entrant dans cette caté-gorie étant $FeF_2$, $FeF_3$, $Cu_xFe_{(1-x)}F_2$ avec $0<x\leq1$, NiO.

Le matériau actif peut consister uniquement en un matériau de conversion ou peut comprendre, en outre, un fluorure d'élément alcalin, tel que LiF, un matériau répondant à cette spécificité étant le matériau LiF-NiO.

L'électrode positive peut être constituée uniquement du matériau actif, à savoir, le matériau de conversion ou peut comprendre, en outre :

- un liant polymérique, tel que du polyfluorure de vinylidène (connu sous l'abréviation PVDF), un mélange carboxyméthylcellulose (connu sous l'abréviation CMC) avec un latex du type styrène-butadiène (connu sous l'abréviation SBR) ou avec de l'acide polyacrylique (connu sous l'abréviation PAA) ; et/ou
- un ou plusieurs adjuvants conducteurs de l'électricité, qui peuvent être des matériaux carbonés comme du noir de carbone.

L'électrode positive peut être associée, selon l'invention, à un collecteur de courant, par exemple, en aluminium, ce qui signifie, en d'autres termes, qu'elle est directement en contact avec ce collecteur, pour permettre l'acheminement du courant électrique vers l'extérieur de la cellule électrochimique. Le collecteur de courant peut se présenter sous forme d'un feuillard en aluminium. L'électrode positive, quant à elle, peut se présenter sous forme d'une couche enduite sur le collecteur de courant.

Lors de l'étape de charge, tandis que l'électrode négative subit un phénomène d'expansion volumique, l'électrode positive subit un phénomène de rétractation volumique liée à la reformation du matériau de conversion. A l'inverse, lors de l'étape de décharge, tandis que l'électrode négative subit un phénomène de rétractation volumique liée à la réaction de désalliage, l'électrode positive subit un phénomène d'expansion volumique liée à la réaction de réduction du matériau de conversion. A titre d'exemple, les variations volumiques pour le passage d'une mole de $FeF_2$ à une mole de Fe et deux moles de LiF peuvent être estimées à plus de 16,5% sur la base des densités des composés (4,09 g.cm$^{-3}$ pour $FeF_2$, 7,874 g.cm$^{-3}$ pour Fe et 2,64 g.cm$^{-3}$ pour LiF). Que ce soit en régime de charge et de décharge, les phénomènes de modification volumique de l'électrode négative sont compensés par ceux de l'électrode positive, ce qui permet de maintenir un volume global de la cellule sensiblement constant.

L'électrolyte disposé entre l'électrode positive et l'électrode négative peut être un électrolyte liquide comprenant (voire est constitué de) un ou plusieurs solvants organiques et au moins un sel de M.

L'électrolyte liquide peut être confiné dans le séparateur disposé entre l'électrode positive et l'électrode négative, qui permet, en outre, une séparation physique entre celles-ci.

Ce séparateur est, avantageusement, en un matériau poreux apte à accueillir dans sa porosité l'électrolyte liquide.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 $\mu$m à 300 $\mu$m.

Le ou les solvants organiques peuvent être des solvants carbonates et, plus spécifiquement :

- des solvants carbonates cycliques, tel que le carbonate d'éthylène (symbolisé par l'abréviation EC), le carbone de propylène (symbolisé par l'abréviation PC), le carbonate de butylène, le carbonate de vinylène, le carbonate de fluoroéthylène, le carbonate de fluoropropylène et les mélanges de ceux-ci ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC) et les mélanges de ceux-ci.

Le ou les solvants organiques peuvent être également des solvants esters (tels que le propionate d'éthyle, le propionate de n-propyle), des solvants nitriles (tels que l'acétonitrile) ou des solvants éthers (tels que le diméthyléther, le 1,2-diméthoxyéthane).

Le ou les sels de M peuvent être choisis parmi les sels de formules suivantes : MI, $M(PF_6)_n$, $M(BF_4)n$, $M(ClO_4)_n$, M(bis(oxalato)borate)$_n$ (pouvant être désigné par l'abréviation $M(BOB)_n$), $MCF_3SO_3$, $M[N(FSO_2)_2]_n$, $M[N(CF_3SO_2)_2]_n$, $M[N(C_2F_5SO_2)_2]_n$, $M[N(CF_3SO_2)(R_FSO_2)]_n$, dans laquelle $R_F$ est un groupe $-C_2F_5$, $-C_4F_9$ ou $-CF_3OCF_2CF_3$, $M(AsF_6)_n$, $M[C(CF_3SO_2)_3]_n$, $M_2S_n$, $M(C_6F_3N_4)$ ($C_6F_3N_4$ correspondant à du 4,5-dicyano-2-(trifluorométhyl)imidazole), M pouvant être en particulier un élément alcalin ou un élément alcalino-terreux et, plus spécifiquement encore, M est Li (notamment, lorsque l'accumulateur est un accumulateur au lithium), Na (notamment, lorsque l'accumulateur est un accumulateur au sodium), K (notamment, lorsque l'accumulateur est un accumulateur au potassium), Mg (notamment, lorsque l'accumulateur est un accumulateur au magnésium), Ca (notamment, lorsque l'accumulateur est un accumulateur au calcium) et n correspond au degré de valence de l'élément M (typiquement, 1, 2 ou 3).

En outre, l'électrolyte liquide peut comprendre au moins un additif appartenant à la catégorie des composés carbonatés (étant entendu que cet additif est différent du ou des solvants carbonates compris, le cas échéant, dans l'électrolyte), tel que du carbonate de vinylidène ou du carbonate de fluoroéthylène, chaque additif pouvant être compris dans l'électrolyte à une teneur ne dépassant pas 10% massique de la masse totale de l'électrolyte.

Plus spécifiquement, l'électrolyte comporte un ou plusieurs additifs choisis parmi le carbonate de vinylidène, le carbonate de fluoroéthylène et les mélanges de ceux-ci.

En particulier, une cellule électrochimique spécifique conforme à l'invention est une cellule comprenant :

- une électrode négative comprenant, comme matériau actif, un composite graphite-silicium ;
- une électrode positive comprenant, comme matériau actif, un fluorure de fer et de cuivre, tel que $Cu_{0,5}Fe_{0,5}F_2$ ;
- un électrolyte comprenant un mélange de solvants carbonates (par exemple, un mélange de carbonate d'éthylène et de carbonate de diéthyle en proportions égales), un sel de lithium et, comme additifs, du carbonate de vinylidène et du carbonate de trifluoroéthylène.

Enfin, l'invention a trait à un accumulateur au lithium comprenant une ou plusieurs cellules électrochimiques telle(s) que définie(s) ci-dessus.

Les accumulateurs de l'invention peuvent, en outre, être adaptés à différents types de formats, tels que le format du type pile bouton, les formats cylindriques, en particulier, les formats AAA, AA, C, D et DD ; les formats bobinés ou spiralés ; le format prismatique.

Les accumulateurs de l'invention permettent, en particulier, l'obtention de hautes densités d'énergie, du fait de l'utilisation d'un matériau alliable pour entrer dans la constitution du matériau actif de l'électrode négative.

La ou les cellules conformes à l'invention peuvent être préparées par un procédé comprenant une étape d'assemblage de l'électrode positive, de l'électrode négative et de l'électrolyte disposé entre l'électrode négative et l'électrode positive.

Pour être directement en état de fonctionnement (c'est-à-dire à l'état chargé), l'électrode négative peut être introduite directement sous une forme, où le matériau actif est sous forme alliée avec l'élément M (par exemple, du lithium, lorsque la cellule de l'accumulateur est une cellule pour accumulateur au lithium), ce qui peut impliquer la mise en œuvre d'une étape d'introduction de l'élément M dans le matériau actif de l'électrode négative (il s'agira de prélithiation si M correspond à du lithium) avant l'introduction de l'électrode négative dans la cellule.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

**BRÈVE DESCRIPTION DES DESSINS**

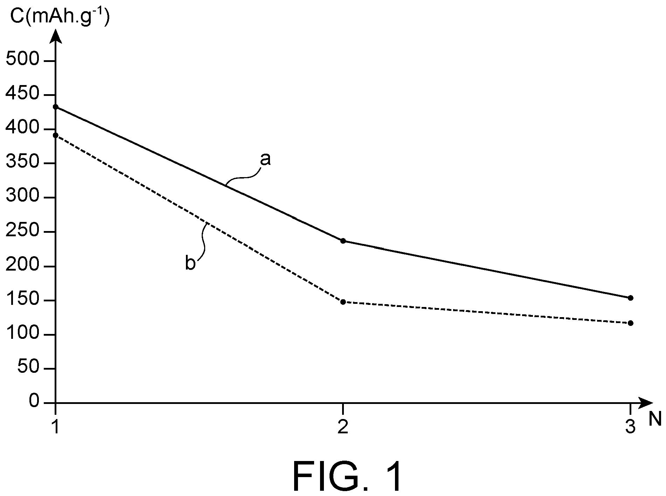

La figure 1 est un graphique illustrant l'évolution de la capacité de décharge C (en mAh/g) en fonction du nombre de cycles N pour des piles exemplifiées dans l'exemple 1 ci-dessous.

**EXPOSÉ DÉTAILLÉ DE MODES DE RÉALISATION PARTICULIERS**

EXEMPLE 1

Le présent exemple illustre la préparation d'une cellule conforme à l'invention se présentant sous forme d'une pile bouton comprenant :

- comme électrode négative, une électrode négative comprenant, comme matériau actif, un composite silicium-graphite ; et
- comme électrode positive, une électrode comprenant, comme matériau actif, un fluorure de fer et de cuivre répondant à la formule $Cu_{0,5}Fe_{0,5}F_2$ ; et
- un électrolyte disposé entre ladite électrode positive et l'électrode négative, dont la composition sera explicitée ci-dessous.

En premier lieu est préparé le matériau actif de l'électrode positive de formule $Cu_{0,5}Fe_{0,5}F_2$ par broyage à billes. Pour ce faire, un nombre de moles équivalent des deux précurseurs $CuF_2$ et $FeF_2$ (obtenus auprès du fournisseur Aldrich) ont été placés dans un bol de broyage de 50 mL en inox contenant 15 billes de différents diamètres. Le bol de broyage, rempli sous argon en boîte à gants, est fermé par une bride et placé sur un broyeur planétaire RETCH PM100. Après un temps de broyage de 12 heures à 300 tours/min, le bol de broyage est déchargé en boîte à gants sous argon et le matériau sous forme de poudre est caractérisé par diffraction des rayons X sous kapton, afin de préserver sa structure.

La poudre ainsi obtenue est mélangée intimement à hauteur de 80%, dans une boîte à gants et sous argon, avec 10% de carbone Super P, 10% de polyfluorure de vinylidène (PVDF) dans du N-méthyl-2-pyrrolidone (NMP), le mélange résultant étant enduit sur un feuillard en aluminium avec une racle réglée à une épaisseur humide de 100 μm. Après séchage sous vide à 80°C, l'électrode est ensuite obtenue par découpe d'un disque de diamètre 14 mm suivie d'une compression toujours sous argon.

En second lieu est préparée l'électrode négative, en salle anhydre, par mélange du matériau actif, qui est un composite silicium-graphite (60/40), avec de la carboxyméthylcellulose (CMC), un latex styrène-butadiène (SBR) et des fibres de carbone VGCF, ledit matériau actif étant présent à hauteur de 88% massique du mélange, la carboxyméthylcellulose étant présente à hauteur de 2% massique du mélange, le latex étant présent à hauteur de 4% massique du mélange et les fibres étant présentes à hauteur de 6 % massique du mélange. Le mélange est ensuite déposé sur un feuillard en cuivre. L'électrode est ensuite obtenue par découpe d'un disque de diamètre de 16 mm.

L'électrode négative ainsi obtenue est soumise à une prélithiation (en d'autres termes, de sorte à ce qu'elle soit à l'état chargé) en la montant dans une pile bouton face à une électrode en lithium métallique, les deux électrodes étant séparées par un séparateur de type Celgard 2500 imprégné d'un électrolyte comprenant un mélange de solvants carbonates (carbonate d'éthylène/carbonate de diéthyle) (1 :1 en volume), du carbonate de vinylidène à hauteur de 2% massique par rapport à la masse totale de l'électrolyte, du carbonate de trifluoroéthylène à hauteur de 10 % massique par rapport à la masse totale de l'électrolyte et un sel de lithium $LiPF_6$ (1M).

La prélithiation effectuée, la pile bouton est démontée en boîte à gants puis l'électrode négative est récupérée et rincée avec du carbonate de diméthyle puis séchée sous argon. L'électrode négative est ensuite montée dans une pile bouton face à l'électrode positive comprenant, comme matériau actif, du $Cu_{0,5}Fe_{0,5}F_2$, cette électrode positive présentant une capacité équivalente, de sorte à équilibrer la pile bouton. Dans cette pile, les deux électrodes sont séparées par un séparateur de type Celgard 2500 imprégné d'un électrolyte comprenant un mélange de solvants carbonates (carbonate d'éthylène/carbonate de diéthyle) (1 :1 en volume), du carbonate de vinylidène à hauteur de 2% massique par rapport à la masse totale de l'électrolyte, du carbonate de trifluoroéthylène à hauteur de 10 % massique par rapport à la masse totale de l'électrolyte et un sel de lithium $LiPF_6$ (1M).

En parallèle est réalisée une pile bouton similaire si ce n'est que l'électrode négative comportant, comme matériau actif, un composite silicium-graphite, est remplacée par une électrode négative en lithium métallique.

Les deux piles boutons sont soumises à des tests électriques à C/50 entre 4,25 V et 1 V et il est déterminé l'évolution de la capacité de décharge C (en mAh/g) en fonction du nombre de cycles N, les résultats étant reportés sur la figure 1 jointe en annexe (courbe a) pour la pile conforme à l'invention et courbe b) pour la pile non conforme à l'invention).

Il ressort que la pile bouton conforme à l'invention présente une capacité de décharge supérieure à la pile bouton non conforme à l'invention, par exemple, une capacité de décharge d'environ 240 mAh/g pour le deuxième cycle pour la pile bouton conforme à l'invention contre 150 mAh/g pour la pile bouton non conforme à l'invention.

## Revendications

1. Cellule électrochimique pour accumulateur fonctionnant selon le principe de formation d'un alliage avec le matériau actif de l'électrode négative lors du processus de charge comprenant :

   - une électrode négative comprenant, comme matériau actif, un matériau actif comprenant un matériau alliable avec un élément M, M étant un élément alcalin ou un élément alcalino-terreux;
   - une électrode positive comprenant, comme matériau actif, un matériau actif comprenant un matériau de conversion ;
   - un électrolyte comprenant au moins un sel de M disposé entre l'électrode négative et l'électrode positive.

2. Cellule électrochimique selon la revendication 1, dans laquelle l'élément M est un élément alcalin choisi parmi :

   - le lithium, le matériau alliable comprenant, dans ce cas, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci ;
   - le sodium, le matériau alliable comprenant, dans ce cas, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci ;
   - le potassium, le matériau alliable comprenant, dans ce cas, du plomb au degré d'oxydation 0, de l'étain au degré d'oxydation 0, du silicium au degré d'oxydation 0, du germanium au degré d'oxydation 0, de l'antimoine au degré d'oxydation 0, du phosphore au degré d'oxydation 0 ou des combinaisons de ceux-ci.

3. Cellule électrochimique selon la revendication 1 ou 2, dans laquelle l'élément M est du lithium et le matériau alliable comprend du silicium au degré d'oxydation 0.

4. Cellule électrochimique selon l'une quelconque des revendications précédentes, dans laquelle le matériau actif de l'électrode négative comprend, en outre, au moins un élément actif apte à intercaler l'élément M lors du processus de charge.

5. Cellule électrochimique selon la revendication 4, dans laquelle l'élément actif est du graphite.

6. Cellule électrochimique selon l'une quelconque des revendications précédentes, dans laquelle l'électrode négative comprend, en outre :

   - un liant polymérique ; et/ou
   - un ou plusieurs adjuvants conducteurs de l'électricité.

7. Cellule électrochimique selon l'une quelconque des revendications précédentes, dans laquelle le matériau de conversion comprend un fluorure d'au moins un élément métallique de transition, un phosphure d'au moins un élément métallique de transition, un sulfure d'au moins un élément métallique de transition, un oxyde d'au moins un élément métallique de transition et/ou des mélanges de ceux-ci.

8. Cellule électrochimique selon l'une quelconque des revendications précédentes, dans laquelle le matériau de conversion est un fluorure d'au moins un élément métallique de transition.

9. Cellule électrochimique selon l'une quelconque des revendications précédentes, dans laquelle le matériau de conversion est un fluorure de fer et de cuivre.

10. Cellule électrochimique selon l'une quelconque des revendications précédentes, dans laquelle l'électrode positive comprend, en outre :

    - un liant polymérique ; et/ou
    - un ou plusieurs adjuvants conducteurs de l'électricité.

11. Cellule électrochimique selon l'un quelconque des revendications précédentes, dans laquelle l'électrolyte est un électrolyte liquide comprenant un ou plusieurs solvants organiques et au moins un sel de M.

12. Cellule électrochimique selon la revendication 11, dans laquelle le ou les sels de M sont choisis parmi les sels de formules suivantes : $MI$, $M(PF_6)_n$, $M(BF_4)n$, $M(ClO_4)_n$, $M(bis(oxalato)borate)_n$, $MCF_3SO_3$, $M[N(FSO_2)_2]_n$, $M[N(CF_3SO_2)_2]_n$, $M[N(C_2F_5SO_2)_2]_n$, $M[N(CF_3SO_2)(R_FSO_2)]_n$, dans laquelle $R_F$ est un groupe $-C_2F_5$, $-C_4F_9$ ou $-CF_3OCF_2CF_3$, $M(AsF_6)_n$, $M[C(CF_3SO_2)_3]_n$, $M_2S_n$, $M(C_6F_3N_4)$, $C_6F_3N_4$ correspondant à du 4,5-dicyano-2-(trifluorométhyl)imidazole, M étant un élément alcalin ou un élément alcalino-terreux et n correspond au degré de valence de l'élément M.

13. Cellule électrochimique selon la revendication 11 ou 12, dans laquelle l'électrolyte comporte un ou plusieurs additifs choisis parmi le carbonate de vinylidène, le carbonate de fluoroéthylène et les mélanges de ceux-ci.

14. Cellule électrochimique selon l'une quelconque des revendications précédentes, qui est une cellule comprenant :

    - une électrode négative comprenant, comme matériau actif, un composite graphite-silicium ;
    - une électrode positive comprenant, comme matériau actif, un fluorure de fer et de cuivre ;
    - un électrolyte comprenant un mélange de solvants carbonates, un sel de lithium et, comme additifs, du carbonate de vinylidène et du carbonate de trifluoroéthylène.

15. Accumulateur au lithium comprenant une ou plusieurs cellules électrochimiques telles que définies selon l'une quelconque des revendications 1 à 14.

**Patentansprüche**

1. Elektrochemische Zelle für Akkumulator, die gemäß dem Prinzip des Bildens einer Legierung mit dem aktiven Material der negativen Elektrode während des Ladevorgangs funktioniert, umfassend:

    - eine negative Elektrode, umfassend ein aktives Material, umfassend ein Material, das mit einem Element M legierbar ist, als aktives Material, wobei M ein Alkalielement oder ein Erdalkalielement ist;
    - eine positive Elektrode, umfassend ein aktives Material, umfassend ein Umwandlungsmaterial, als aktives Material;
    - einen Elektrolyten, umfassend mindestens ein Salz von M, der zwischen der negativen Elektrode und der positiven Elektrode angeordnet ist.

2. Elektrochemische Zelle nach Anspruch 1, wobei das Element M ein Alkalielement ist, ausgewählt aus:

    - Lithium, wobei das legierbare Material in diesem Fall Blei mit einem Oxidationsgrad 0, Zinn mit einem Oxidationsgrad 0, Silicium mit einem Oxidationsgrad 0, Germanium mit einem Oxidationsgrad 0, Antimon mit einem Oxidationsgrad 0, Phosphor mit einem Oxidationsgrad 0 oder Kombinationen dieser umfasst;
    - Natrium, wobei das legierbare Material in diesem Fall Blei mit einem Oxidationsgrad 0, Zinn mit einem Oxidationsgrad 0, Silicium mit einem Oxidationsgrad 0, Germanium mit einem Oxidationsgrad 0, Antimon mit einem Oxidationsgrad 0, Phosphor mit einem Oxidationsgrad 0 oder Kombinationen dieser umfasst;
    - Kalium, wobei das legierbare Material in diesem Fall Blei mit einem Oxidationsgrad 0, Zinn mit einem Oxidationsgrad 0, Silicium mit einem Oxidationsgrad 0, Germanium mit einem Oxidationsgrad 0, Antimon mit einem Oxidationsgrad 0, Phosphor mit einem Oxidationsgrad 0 oder Kombinationen dieser umfasst.

3. Elektrochemische Zelle nach Anspruch 1 oder 2, wobei das Element M Lithium ist und das legierbare Material Silicium mit einem Oxidationsgrad 0 umfasst.

4. Elektrochemische Zelle nach einem der vorhergehenden Ansprüche, wobei das aktive Material der negativen Elektrode weiterhin mindestens ein aktives Element umfasst, das dazu fähig ist, das Element M während des Ladevorgangs zu interkalieren.

5. Elektrochemische Zelle nach Anspruch 4, wobei das aktive Element Graphit ist.

6. Elektrochemische Zelle nach einem der vorhergehenden Ansprüche, wobei die negative Elektrode weiterhin umfasst:

    - ein polymeres Bindemittel und/oder
    - ein oder mehrere elektrisch leitende Adjuvantien.

7. Elektrochemische Zelle nach einem der vorhergehenden Ansprüche, wobei das Umwandlungsmaterial ein Fluorid von mindestens einem metallischen Übergangselement, ein Phosphid von mindestens einem metallischen Übergangselement, ein Sulfid von mindestens einem metallischen Übergangselement, ein Oxid von mindestens einem metallischen Übergangselement und/oder Gemische dieser umfasst.

8. Elektrochemische Zelle nach einem der vorhergehenden Ansprüche, wobei das Umwandlungsmaterial ein Fluorid von mindestens einem metallischen Übergangselement ist.

9. Elektrochemische Zelle nach einem der vorhergehenden Ansprüche, wobei das Umwandlungsmaterial ein Fluorid von Eisen und Kupfer ist.

10. Elektrochemische Zelle nach einem der vorhergehenden Ansprüche, wobei die positive Elektrode weiterhin umfasst:

- ein polymeres Bindemittel und/oder
- ein oder mehrere elektrisch leitende Adjuvantien.

11. Elektrochemische Zelle nach einem der vorhergehenden Ansprüche, wobei der Elektrolyt ein flüssiger Elektrolyt ist, umfassend ein oder mehrere organische Lösungsmittel und mindestens ein Salz von M.

12. Elektrochemische Zelle nach Anspruch 11, wobei das oder die Salze von M aus den Salzen mit den folgenden Formeln ausgewählt ist bzw. sind: MI, $M(PF_6)_n$, $M(BF_4)_n$, $M(ClO_4)_m$, M(Bis(oxalato)borat)$_n$, $MCF_3SO_3$, $M[N(FSO_2)_2]_n$, $M[N(CF_3SO_2)_2]_n$, $M[N(C_2F_5SO_2)_2]_n$, $M[N(CF_3SO_2)(R_FSO_2)]_n$, wobei $R_F$ eine Gruppe $-C_2F_5$, $-C_4F_9$ oder $-CF_3OCF_2CF_3$, $M(AsF_6)_n$, $M[C(CF_3SO_2)3]_n$, $M_2S_n$, $M(C_6F_3N_4)$, wobei $C_6F_3N_4$ 4,5-Dicyano-2-(trifluormethyl)imidazol entspricht, M ein Alkalielement oder ein Erdalkalielement ist und n dem Valenzgrad des Elements M entspricht.

13. Elektrochemische Zelle nach Anspruch 11 oder 12, wobei der Elektrolyt ein oder mehrere Additive umfasst, die aus Vinylidencarbonat, Fluorethylencarbonat und den Gemischen dieser ausgewählt sind.

14. Elektrochemische Zelle nach einem der vorhergehenden Ansprüche, die eine Zelle ist, umfassend:

- eine negative Elektrode, umfassend einen Graphit-Silicium-Verbundwerkstoff als aktives Material;
- eine positive Elektrode, umfassend ein Fluorid von Eisen und Kupfer als aktives Material;
- einen Elektrolyten, umfassend ein Gemisch von Carbonatlösungsmitteln, ein Lithiumsalz und Vinylidencarbonat und Trifluorethylencarbonat als Additive.

15. Lithium-Akkumulator, umfassend eine oder mehrere elektrochemische Zellen, wie in einem der Ansprüche 1 bis 14 definiert.

**Claims**

1. An electrochemical cell for accumulator operating according to the principle of forming an alloy with the active material of the negative electrode during the charge process comprising:

- a negative electrode comprising, as active material, an active material comprising a material alloyable with an element M, M being an alkali element or an alkaline earth element;
- a positive electrode comprising, as active material, an active material comprising a conversion material;
- an electrolyte comprising at least one salt of M disposed between the negative electrode and the positive electrode.

2. The electrochemical cell according to claim 1, wherein the element M is an alkaline element selected from:

- lithium, the alloyable material comprising, in this case, lead with oxidation degree 0, tin with oxidation degree 0, silicon with oxidation degree 0, germanium with oxidation degree 0, antimony with oxidation degree 0, phosphorus with oxidation degree 0 or combinations thereof;
- sodium, the alloyable material comprising, in this case, lead with oxidation degree 0, tin with oxidation degree 0, silicon with oxidation degree 0, germanium with oxidation degree 0, antimony with oxidation degree 0, phosphorus with oxidation degree 0 or combinations thereof;
- potassium, the alloyable material comprising, in this case, lead with oxidation degree 0, tin with oxidation degree 0, silicon with oxidation degree 0, germanium with oxidation degree 0, antimony with oxidation degree 0, phosphorus with oxidation degree 0 or combinations thereof.

3. The electrochemical cell according to claim 1 or 2, wherein the element M is lithium and the alloyable material comprises silicon with oxidation degree 0.

4. The electrochemical cell according to any preceding claim, wherein the active material of the negative electrode further comprises at least one active element capable of intercalating the element M during the charge process.

5. The electrochemical cell according to claim 4, wherein the active element is graphite.

6. The electrochemical cell according to any preceding claim, wherein the negative electrode further comprises:

- a polymer binder; and/or
- one or more electrically conductive adjuvants.

7. The electrochemical cell according to any preceding claim, wherein the conversion material comprises a fluoride of at least one transition metal element, a phosphide of at least one transition metal element, a sulphide of at least one transition metal element, an oxide of at least one transition metal element and/or mixtures thereof.

8. The electrochemical cell according to any preceding claim, wherein the conversion material is a fluoride of at least one transition metal element.

9. The electrochemical cell according to any preceding claim, wherein the conversion material is an iron and copper fluoride.

10. The electrochemical cell according to any preceding claim, wherein the positive electrode further comprises:

   - a polymer binder; and/or
   - one or more electrically conductive adjuvants.

11. The electrochemical cell according to any preceding claim, wherein the electrolyte is a liquid electrolyte comprising one or more organic solvents and at least one salt of M.

12. The electrochemical cell according to claim 11, wherein the salt(s) of M are selected from the salts of the following formulas: MI, $M(PF_6)_n$, $M(BF_4)n$, $M(ClO_4)_n$, $M(bis(oxalato)borate)_n$, $MCF_3SO_3$, $M[N(FSO_2)_2]_n$, $M[N(CF_3SO_2)_2]_n$, $M[N(C_2F_5SO_2)_2]_n$, $M[N(CF_3SO_2)(R_FSO_2)]_n$, wherein $R_F$ is a group $-C_2F_5$, $-C_4F_9$ or $-CF_3OCF_2CF_3$, $M(AsF_6)_n$, $M[C(CF_3SO_2)_3]_n$, $M_2S_n$, $M(C_6F_3N_4)$, $C_6F_3N_4$ corresponding to 4,5-dicyano-2- (trifluoromethyl) imidazole, M being an alkali element or an alkaline earth element and n corresponds to the degree of valence of the element M.

13. The electrochemical cell according to claim 11 or 12, wherein the electrolyte includes one or more additives selected from vinylidene carbonate, fluoroethylene carbonate and mixtures thereof.

14. The electrochemical cell according to any preceding claim, which is a cell comprising:

   - a negative electrode comprising, as active material, a graphite-silicon composite;
   - a positive electrode comprising, as active material, an iron and copper fluoride;
   - an electrolyte comprising a mixture of carbonate solvents, a lithium salt and, as additives, vinylidene carbonate and trifluoroethylene carbonate.

15. A lithium accumulator comprising one or more electrochemical cells as defined according to any preceding claim 1 to 14.

FIG. 1